# EUROPÄISCHE PATENTANMELDUNG

(11) **EP 1 110 913 A1**
(43) Veröffentlichungstag der Anmeldung: **27.06.2001**
(21) Anmeldenummer: 00127907.4
(22) Anmeldetag: 20.12.2000
(51) Int. Cl.: C01C 3/02

(54) **Kontinuierliches Verfahren zur Herstellung von Blausäre durch Thermolyse von Formamid**

(30) Priorität: 22.12.1999 DE 19962418
(71) Anmelder: BASF AKTIENGESELLSCHAFT, 67056 Ludwigshafen (DE)
(72) Erfinder: Mattmann, Wolfgang, Dr., 67117 Limburgerhof (DE); Lenz, Walter, Dr., 68723 Schwetzingen (DE); Menig, Helmuth, Dr., 67159 Friedelsheim (DE); Siegel, Wolfgang, Dr., 67117 Limburgerhof (DE)
(74) Vertreter: Isenbruck, Günter, Dr.

(57) **Zusammenfassung**

Es wird ein kontinuierliches Verfahren zur Herstellung von Blausäure durch Thermolyse von gasförmigem, überhitztem Formamid bei erhöhter Temperatur und unter verrnindertem Druck in Gegenwart eines feinteiligen Feststoffkatalysators in einem Thermolysereaktor vorgeschlagen, wobei der Feststoffkatalysator durch eine vertikal-aufwärts gerichtete oder vertikal-abwärts gerichtete Strömung des gasförmigen Reaktionsgemisches in Bewegung gehalten wird.

## Beschreibung

Die Erfindung betrifft ein kontinuierliches Verfahren zur Herstellung von Blausäure durch Thermolyse von Formamid in Gegenwart eines Feststoffkatalysators.

Nach bekannten großtechnischen Verfahren, beispielsweise entsprechend EP-A-0 209 039, wird Blausäure durch thermolytische Spaltung von Formamid in Rohrbündelreaktoren durchgeführt. Gemäß EP-A-0 209 039 wird hierzu flüssiges Formamid verdampft, überhitzt und bei Temperaturen von 300 bis 480°C und unter vermindertem Druck von 100 bis 350 mbar zusammen mit einem Volumenanteil von 0,1 bis 10 % Luft in die mit hochgesinterten Katalysatorformkörpern aus Aluminiumoxid und Siliciumdioxid gefüllten Rohre des Rohrbündelreaktors eingeleitet. Die Reaktion findet bei 450 bis 590°C und Verweilzeiten kleiner als 0,25 Sekunden statt. Bei einer derartigen Verfahrensführung ist es unvermeidbar, daß die Katalysatorwirksamkeit mit der Zeit absinkt und daß der Reaktor in bestimmten Intervallen abgestellt werden muß, damit der Katalysator regeneriert werden kann. Da bei der bekannten Verfahrensführung, mit Überleitung des Reaktionsgemisches über die in den Rohren des Rohrbündelreaktors angeordneten Katalysatorformkörper weder ein konstantes Temperaturprofil über den gesamten Reaktorquerschnitt, noch über die Länge der Reaktionsrohre erreicht werden kann, kommt es zur unterschiedlichen Verkokung in den einzelnen Rohren, zur zeitlichen Vergrößerung der Unterschiede mit fortschreitender Reaktion und somit zu abnehmender Selektivität der Reaktion.

Es ist demgegenüber Aufgabe der Erfindung, ein Verfahren mit erhöhter Wirtschaftlichkeit zu Verfügung zu stellen, das sich durch niedrigere Investitionskosten, durch eine erhöhte Anlagenverfügbarkeit, durch Wegfall der Regenerationsphase, eine erhöhte Raumzeitausbeute, sowie eine bessere und gleichmäßigere Katalysatorausnutzung mit der Folge einer weiteren Selektivitätssteigerung, kennzeichnet.

Die Lösung geht aus von einem kontinuierlichen Verfahren zur Herstellung von Blausäure durch Thermolyse von gasförmigem Formamid in Gegenwart eines feinteiligen Feststoffkatalysators in einem Thermolysereaktor.

Die Erfindung ist dann dadurch gekennzeichnet, daß der Feststoffkatalysator durch eine vertikal-aufwärts oder vertikal-abwärts gerichtete Strömung des gasförmigen Reaktionsgemisches in Bewegung gehalten wird.

Die Thermolyse von Formamid wird vorliegend, wie in großtechnischen Verfahren üblich, bei Temperaturen im Bereich von 400 bis 800°C und Absolutdrücken von 100 mbar bis 1 bar durchgeführt. Bezüglich der einsetzbaren Feststoffkatalysatoren gibt es ebenfalls keine grundsätzlichen Einschränkungen Vorzugsweise werden Aluminiumoxid oder Aluminiumoxid/Siliciumdioxid eingesetzt. Der vorliegend einzusetzende Feststoffkatalysator ist feinteilig, das heißt, die Kornfraktionen, die mittels Siebanalyse gemäß DIN 4193 bestimmt wurden, liegen im Bereich von 0 bis 1000 µm, bevorzugt im Bereich von 0 bis 200 µm. Das Edukt Formamid wird, wie bei der Thermolyse zu Blausäure allgemein üblich, bei den oben angegebenen Temperaturen und Drücken in den Thermolysereaktor eingeleitet.

Als Thermolysereaktor ist grundsätzlich jeder Reaktor einsetzbar, der für die oben erwähnten Temperatur- und Druckbereiche ausgelegt ist. Der Thermolysereaktor weist an einem Ende eine Zuführung und am entgegengesetzten Ende eine Abführung für das gasförmige Reaktionsgemisch auf. Der feinteilige Feststoffkatalysator ist gegebenenfalls auf einem im unteren Bereich des Reaktors, oberhalb der Zuführung für das Reaktionsgemisch angeordneten Anströmboden angeordnet. Erfindungsgemäß wird der feinteilige Feststoffkatalysator durch eine vertikal-aufwärts oder vertikal-abwärts gerichtete Strömung des gasförmigen Reaktionsgemisches in Bewegung gehalten, das heißt die einzelnen Teilchen des Feststoffkatalysators ändern ständig ihre relative Lage zueinander sowie auch ihre Lage im Reaktor. Im Reaktor liegt somit eine vertikal-aufwärts oder vertikal-abwärts gerichtete Gas-Feststoff-Strömung vor, das heißt Feststoffpartikel bewegen sich gleichsinnig mit dem Gas.

Aus der Strömungstechnik ist es bekannt, daß der Strömungszustand in derartigen Systemen von den eingesetzten Feststoffpartikeln, insbesondere deren Größe, der Gasart und der eingestellten Gasgeschwindigkeit abhängt. Bei kleinen Gasgeschwindigkeiten befindet sich die auf dem Anströmboden liegende Feststoffschicht in Ruhe; es liegt ein Festbett vor. Wird die Gasgeschwindigkeit gesteigert, so bewegen sich ab der sogenannten Lockerungsgasgeschwindigkeit oder Minimalfluidisationsgeschwindigkeit die Feststoffpartikeln relativ gegeneinander; der Strömungszustand wird als Wirbelschicht bezeichnet. Mit weiterer Erhöhung der Gasgeschwindigkeit tritt ab der sogenannten Einzelkomsinkgeschwindigkeit der kleinsten Feststoffpartikeln ein Feststoffaustrag vor. Die Wirbelschicht kann nur dann stationär betrieben werden, wenn der ausgetragene Feststoff in einem Zyklon abgeschieden und der Wirbelschicht erneut zugeführt wird oder wenn ständig genau so viel Feststoff in die Wirbelschicht zwangsweise eindosiert wird, wie aus ihr ausgetragen wird. Der Strömungszustand wird als zirkulierende Wirbelschicht bezeichnet.

Mit weiterer Erhöhung der Gasgeschwindigkeit stellt sich ein Strömungszustand ein, bei dem außerhalb des Beschleunigungsbereiches der Feststoffpartikeln unmittelbar oberhalb des Anströmbodens kein Gradient der Feststoffkonzentration über die Apparatehöhe auftritt. Ein Anströmboden ist bei diesen Gasgeschwindigkeiten nicht mehr zwingend erforderlich. Der Strömungszustand wird als pneumatische Förderung bezeichnet, der entsprechende Apparat als Flugstaubreaktor oder Transportreaktor.

Nach dem erfindungsgemäßen Verfahren wird der Feststoffkatalysator in Bewegung gehalten, das heißt es wird der Strömungszustand der Wirbelschicht, der zirkulierenden Wirbelschicht oder der pneumatischen Förderung realisiert. Die hierzu einzustellenden Strömungsgeschwindigkeiten des gasförmigen Reaktionsgemisches kann der Strömungsfachmann in Kenntnis der konkreten Verfahrensparameter ermitteln. Bevorzugt wird das gasförmige Reaktionsgemisch mit einer Leerrohrgeschwindigkeit von 0,2 m/s bis 30 m/s, besonders bevorzugt mit einer Leerrohrgeschwindigkeit im Bereich von 8 m/s bis 20 m/s durch den Reaktor geführt.

In einer Ausführungsvariante wird der Thermolysereaktor als Wirbelschichtreaktor betrieben. Dazu wird die Geschwindigkeit des gasförmigen Reaktionsgemisches im Bereich zwischen der Lockerungsgasgeschwindigkeit und der Einzelkornsinkgeschwindigkeit eingestellt.

Ein weitere bevorzugte Ausführungsvariante sieht vor, daß die Thermolyse in einer zirkulierenden Wirbelschicht ausgeführt wird. Hierzu wird die Geschwindigkeit des gasförmigen Reaktionsgemisches auf einen Wert oberhalb der Einzelkornsinkgeschwindigkeit und unterhalb der Geschwindigkeit, die zur pneumatischen Förderung führt, eingestellt.

In einer weiteren bevorzugten Variante wird die Thermolyse in einem Flugstaubreaktor durchgeführt. Hierzu wird die Geschwindigkeit des gasförmigen Reaktionsgemisches so eingestellt, daß der Strömungszustand der pneumatischen Förderung erreicht wird.

In einer Ausführungsvariante wird der Thermolysereaktor von oben nach unten vom Gas/Feststoff-Gemisch durchströmt. Ein derartiger Thermolyseraktor wird als Fallstromreaktor (Downer) bezeichnet. Diese Variante hat den zusätzlichen Vorteil, daß Gas- und Feststoffdurchsatz unabhängig voneinander eingstellt werden können.

Die für die endotherme Reaktion benötigte erhöhte Temperatur kann in einer Ausführungsvariante durch indirekte Energiezufuhr bewirkt werden. Bevorzugt werden hierzu im Thermolysereaktor Wärmetauscherrohre angeordnete, die von einem Wärmeträgermedium durchströmt sind. Es kann grundsätzlich jedes geeignete Wärmeträgermedium eingesetzt werden.

Besonders günstig ist es jedoch, zusätzlich oder alternativ zur indirekten Energiezufuhr eine direkte Energiezufuhr vorzusehen. Hierzu kann bevorzugt der feinteilige Feststoffkatalysator zunächst mittels Rauchgas aufgeheizt, anschließend vom Rauchgas, insbesondere in einem Zyklon, abgetrennt und schließlich in den Thermolysereaktor eingeleitet werden. Als Rauchgase werden Verbrennungsgase beliebiger Brennstoffe bezeichnet.

In einer weiteren bevorzugten Ausführungsvariante kann die direkte Energiezufuhr mittels überhitztem Wasserdampf, d. h. mit Wasserdampf mit einer Temperatur im Bereich von etwa 400 bis 800°C bewirkt werden, der unmittelbar in den Thermolysereaktor eingeleitet wird. Diese Prozeßvariante hat den zusätzlichen Vorteil, daß die reaktionsübliche Partialdruckforderung von 100 bis 350 mbar erreicht werden kann und dabei dennoch der Prozeß bei einem Gesamtdruck im Bereich des Atmosphärendrucks gefahren werden kann. Dadurch entschärfen sich die mit der Unterdruckfahrweise verbundenen apparativen Anforderungen.

Die geometrische Ausgestaltung des Thermolysereaktors ist grundsätzlich nicht eingeschränkt. Besonders bevorzugt ist jedoch die Ausgestaltung als vertikal stehender Zylinder mit einem Durchmesser im Bereich von 0, 1 bis 12 m, insbesondere von 3 bis 6 m, besonders bevorzugt von 4 m und einer Höhe im Bereich von 8 bis 35 m, insbesondere 20 bis 30 m, besonders bevorzugt von 30 m.

Die Erfindung wird im folgenden anhand eines Ausführungsbeispiels näher erläutert.

In einem zylindrischen Reaktor mit einem Durchmesser von 4 m und einer Höhe von 30 m, in dessen unterem Bereich auf einem Anströmboden hochgesinterte Aluminiumoxidkatalysatorpartikel mit einer durchschnittlichen Teilchengröße von 50 µm eingebracht waren, wurde ein gasförmiges Reaktionsgemisch aus Formamid mit einer Temperatur von 160°C entsprechend einem Druck von 170 mbar sowie mit 3 Volumenprozenten Luft zugeführt. Der Prozeßdruck betrug 150 mbar, die Leerrohrgeschwindigkeit des gasförmigen Reaktionsgemisches 20 m/s und die mittlere Gasverweilzeit 1,5 sec.. Im Thermolysereaktor stellte sich der Strömungszustand einer zirkulierenden Wirbelschicht ein. Die für den Thermolysereaktor aufzuwendenden Investitionskosten lagen bei lediglich einem Drittel der für einen konventionellen Rohrbündelreaktor mit gleichem Formamidumsatz aufzuwendenden Kosten. Die Anlage mußte nicht zu Regenerationszwecken abgestellt werden. Im Gegensatz zu bekannten Verfahren, die aufgrund der erforderlichen Katalysator-Regeneration für einen kontinuierlichen Betrieb mindestens zwei Thermolysereaktoren benötigen, ist nach dem erfindungsgemäßen Verfahren für eine kontinuierliche Herstellung von Blausäure lediglich ein einziger Thermolysereaktor erforderlich.

Nach dem erfindungsgemäßen Verfahren wird ein feinteiliger Katalysator eingesetzt. Es gilt jedoch allgemein, daß die spezifische Oberfläche mit abnehmendem Teilchendurchmesser zunimmt. So hat beispielsweise dieselbe Menge an Katalysatormaterial, die zu Würfeln mit einer Kantenlänge von 10 µm verarbeitet wird, hat eine 1000 mal größere Oberfläche gegenüber einer Form, die als Würfel mit der Kantenlänge 1 cm vorliegt. Entsprechend besser ist die Ausnutzung des teuren Katalysatormaterials.

Der erfindungsgemäß eingesetzte feinteilige Katalysator hat den weiteren Vorteil gegenüber den nach dem bekannten Verfahren eingesetzten Katalysatorformkörpern, daß er für eine mechanische Schädigung nicht anfällig ist.

Dadurch, daß erfindungsgemäß das gasförmige Reaktionsgemisch in Bewegung gehalten wird, wird ein besserer Wärmeeintrag sowie ein verbesserter Stoffaustausch mit der Folge einer weitgehend gleichmäßigen Temperatur über den gesamten Thermolysereaktor und somit eine Verbesserung der Selektivität der Reaktion gewährleistet. Demgegenüber bildet sich in den Festbettrohren nach dem bekannten großtechnischen Verfahren stets ein Temperaturprofil über die Länge der Festbettrohre aus, mit der Folge einer ungleichmäßigen Katalysatorausnutzung sowie eines Abfalls der Selektivität.

Das erfindungsgemäße Verfahren hat den weiteren Vorteil, daß man nicht an die Verwendung einer Salzschmelze als Wärmeträgermedium gebunden ist. Herkömmliche großtechnische Rohrbündelapparate für die Thermolyse von Formamid werden mit Salzschmelzen als Wärmeträgermedium aufgeheizt, um eine zumindest weitgehende Isothermie über den Reaktorquerschnitt zu gewährleisten. Mit Rauchgas als Wärmeträgermedium ist eine noch akzeptable Temperaturgleichverteilung nicht erreichbar. Beim Einsatz von Salzschmelzen sind jedoch technische Obergrenzen von ca. 550°C vorgegeben. Eine derartige Begrenzung bezüglich des Wärmetauschmittels und somit der Temperatur ist demgegenüber nach dem erfindungsgemäßen Verfahren nicht gegeben.

Die Kapazität bekannter großtechnischer Anlagen ist aus technischen Gründen, insbesondere den Abmessungen und der Stabilität der Rohrböden, zwischen die die Rohre des Rohrbündels eingesetzt werden sowie aus Gründen der erreichbaren Temperaturvergleichmäßigung nach oben begrenzt. Derartige Begrenzungen in der Anlagenkapazität gibt des demgegenüber für das Verfahren gemäß der vorliegenden Erfindung nicht.

## Patentansprüche

1. Kontinuierliches Verfahren zur Herstellung von Blausäure durch Thermolyse von gasförmigem Formamid in Gegenwart eines feinteiligen Feststoffkatalysators in einem Thermolysereaktor, dadurch gekennzeichnet, daß der Feststoffkatalysator durch eine vertikal-aufwärts oder vertikal-abwärts gerichtete Strömung des gasförmigen Reaktionsgemisches in Bewegung gehalten wird.

2. Verfahren nach Anspruch 1, dadurch gekennzeichnet, daß der Thermolysereaktor ein Wirbelschichtreaktor ist.

3. Verfahren nach Anspruch 2, dadurch gekennzeichnet, daß der Thermolysereaktor ein Wirbelschichtreaktor mit zirkulierender Wirbelschicht ist.

4. Verfahren nach Anspruch 1, dadurch gekennzeichnet, daß der Thermolysereaktor ein Flugstaubreaktor ist.

5. Verfahren nach Anspruch 1, dadurch gekennzeichnet, daß der Thermolysereaktor ein Fallstromreaktor ist.

6. Verfahren nach einem der Ansprüche 1 bis 5, dadurch gekennzeichnet, daß die erhöhte Temperatur für die Thermolyse durch indirekte Energiezufuhr bewirkt wird.

7. Verfahren nach Anspruch 6, dadurch gekennzeichnet, daß die Energiezufuhr über im Thermolysereaktor angeordnete Wärmetauscherrohre erfolgt, die von einem Wärmeträgermedium durchströmt sind.

8. Verfahren nach einem der Ansprüche 1 bis 7, dadurch gekennzeichnet, daß eine direkte Energiezufuhr erfolgt, wobei der Feststoffkatalysator zunächst mittels Rauchgas aufgeheizt, anschließend vom Rauchgas, insbesondere in einem Zyklon, abgetrennt und schließlich in den Thermolysereaktor eingeleitet wird.

9. Verfahren nach einem der Ansprüche 1 bis 8, dadurch gekennzeichnet, daß eine direkte Energiezufuhr mittels überhitztem Wasserdampf erfolgt, der unmittelbar in den Thermolysereaktor eingeleitet wird.

10. Verfahren nach einem der Ansprüche 1 bis 9, dadurch gekennzeichnet, daß der Thermolysereaktor als vertikal stehender Zylinder mit einem Durchmesser im Bereich von 0,1 bis 12 m, insbesondere von 3 bis 6 m, besonders bevorzugt von 4 m und einer Höhe im Bereich von 8 bis 35 m, insbesondere von 20 bis 30 m, besonders bevorzugt von 30 m, ausgebildet ist.

11. Verfahren nach einem der Ansprüche 1 bis 10, dadurch gekennzeichnet, daß das gasförmige Reaktionsgemisch mit einer Leerrohrgeschwindigkeit im Bereich von 0,2 bis 30 m/s, bevorzugt von 8 bis 20 m/s durch den Thermolysereaktor geführt wird.
